# EUROPÄISCHE PATENTSCHRIFT

(11) **EP 2 495 192 B1**
(45) Veröffentlichungstag und Bekanntmachung des Hinweises auf die Patenterteilung: **26.12.2012**
(21) Anmeldenummer: 11157031.3
(22) Anmeldetag: 04.03.2011
(51) Int. Cl.: B65G 47/29

(54) **Vorrichtung und Verfahren zum Einschleusen von Behältern**
Method and device for feeding in containers
Dispositif et procédé d'amenée de récipients

(43) Veröffentlichungstag der Anmeldung: 05.09.2012
(73) Patentinhaber: Uhlmann Pac-Systeme GmbH & Co. KG, 88471 Laupheim (DE)
(72) Erfinder: Kronawitter, Michael, 89179 Beimerstetten (DE); Angele, Stefan, 88422, Moosburg (DE)
(74) Vertreter: Wächter, Jochen

(56) Entgegenhaltungen:
- DE-A1- 10 154 203
- FR-A1- 2 350 285
- FR-A1- 2 487 308
- US-A- 2 771 177

## Beschreibung

Die vorliegende Erfindung betrifft ein Verfahren zum Einschleusen von Behältern in eine Transportvorrichtung.

Für das Einschleusen von Behältern in Transportvorrichtungen existiert im Stand der Technik eine Reihe von unterschiedlichen Möglichkeiten. Viele der bekannten Ausführungsformen arbeiten mit einer Vereinzelungsvorrichtung, welche die aufrecht stehenden Behälter in Transportrichtung vereinzelt und somit für den Weitertransport in vereinzelter Form bereitstellt. Beispiele derartiger Vereinzelungsvorrichtungen sind etwa Vereinzelungsräder, Vereinzelungsschnecken oder auch Vereinzelungsbänder.

Um die vereinzelten Behälter auf einen definierten Abstand zu bringen, wird in der DE 101 54 203 B4 eine der Vereinzelungsrichtung nachgeschaltete Übergabevorrichtung vorgeschlagen, die als umlaufendes Band mit Mitnehmern ausgebildet ist. Allerdings ist diese Übergabevorrichtung ausschließlich für die Übergabe der Behälter an eine kontinuierliche Transportvorrichtung geeignet, und aufgrund der konstanten Geschwindigkeit des umlaufenden Bandes können Probleme auftreten, wenn die Behälter von der Vereinzelungsvorrichtung in unregelmäßigen Abständen bereitgestellt werden.

Die ein gattungsgemäβes Verfahren beschreibende FR 2 350 265 A1 offenbart eine Vorrichtung zur Behandlung von Behältern (insbesondere von Flaschen), die auf einem Förderband kontinuierlich durchlaufen. Dabei werden die Flaschen zunächst durch eine Vereinzelungsvorrichtung vereinzelt und anschließend einer Kontrollstation zugeführt. In dieser Kontrollstation werden die Flaschen durch Gabeln festgehalten und durch Prüfeinheiten untersucht, um anschließend bei festgestellten Mängeln durch die von den Prüfeinheiten gesteuerte Auswurfeinheit aussortiert zu werden.

Der vorliegenden Erfindung liegt die Aufgabe zugrunde, ein Verfahren zum Einschleusen von Behältern anzugeben, mit dem eine robuste Übergabe von Behältern unterschiedlicher Größe und mit unterschiedlichen Geschwindigkeiten an eine getaktete Transportvorrichtung gewährleistet ist.

Diese Aufgabe wird durch die Merkmale der Anspruchs 1 gelöst.

Das erfindungsgemäße Verfahren zum Einschleusen von lose aneinandergereihten aufrecht stehenden Behältern in eine Transportvorrichtung weist folgende Schritte auf: Vereinzeln der lose aneinandergereihten Behälter nacheinander in einer Transportrichtung mittels einer drehbaren Vereinzelungsvorrichtung und sequentielles Auffüllen von in Transportrichtung nacheinander angeordneten Speicherpositionen einer der Vereinzelungsvorrichtung nachgeschalteten stationären Speichereinrichtung mit den vereinzelten Behältern, wobei die Speichereinrichtung eine Mehrzahl von in Transportrichtung in Reihe angeordneten Stoppern, die quer zur Transportrichtung ausgefahren werden, und eine Mehrzahl von Sensoren, die im Bereich der Speicherpositionen oder zwischen den Speicherpositionen angeordnet sind aufweist, wobei ein vorbestimmter Sensor jeweils ein Signal an eine Steuereinrichtung übermittelt und daraufhin ein vorbestimmer, vorzugsweise stromab gelegener, Stopper ausgefahren wird, wodurch die Speicherpositionen sequentiell aufgefüllt werden.

Dabei ist es zur Vermeidung von Schäden an den Behältern und zur variablen Einsetzbarkeit der Vereinzelungsvorrichtung für Behälter aus verschiedenen Materialien besonders bevorzugt, wenn das Vereinzelungsrad eine mit weichem Kunststoff oder Gummi beschichtete Mantelfläche aufweist.

Alternativ kann die Vereinzelungsvorrichtung aus zwei gegenüberliegenden Vereinzelungsbäudern bestehen.

Zur sicheren Führung und zum Vorwärtstransport der Behälter vor und nach der Vereinzelung weist die Vorrichtung vorzugsweise ein Transportband zum Abstellen und Vorwärtsbewegen der Behälter auf, das sich von einem Bereich vor der Vereinzelungsvorrichtung bis mindestens zur Speichereinrichtung erstreckt.

Ein für das erfindungsgemäβe Verfahren geeignete Vorrichtung zum Einschleusen von lose aneinandergereihten aufrecht stehenden Behältern in eine Transportvorrichtung weist eine drehbare Vereinzelungsvorrichtung auf, die darauf ausgerichtet ist, die lose aneinandergereihten Behälter nacheinander in einer Transportrichtung zu vereinzeln. Außerdem weist die Vorrichtung eine der Vereinzelungsvorrichtung nachgeschaltete stationäre Speichereinrichtung für die Behälter auf, die eine Mehrzahl von in Transportrichtung in Reihe angeordneten Stoppern aufweist, die individuell quer zur Transportrichtung ausfahrbar sind und damit eine Mehrzahl von in Transportrichtung nacheinander angeordneten Speicherpositionen für die Behälter definieren.

Auf diese Weise können Behälter verschiedener Größe und Geschwindigkeit vereinzelt und zwischengespeichert werden, bevor sie von einer getaktet arbeitenden Transportvorrichtung übernommen werden.

Eine mechanisch besonders einfache Lösung ergibt sich, wenn die Vereinzelungsvorrichtung als intermittierend angetriebenes Vereinzelungsrad ausgebildet ist.

Mit diesen Verfahrensschritten ist eine sichere und robuste Übergabe der Behälter an eine getaktete Transportvorrichtung möglich, die automatisch und an verschiedene Rahmenbedingungen angepasst ist.

Auch wenn alle Stopper individuell ansteuerbar sind, ist es vorteilhaft, zur Freigabe der Behälter für eine Übernahme durch die getaktete Transportvorrichtung alle Stopper gleichzeitig einzuziehen.

Weitere Merkmale und Vorteile der vorliegenden Erfindung ergeben sich aus der nachfolgenden Beschreibung unter Bezugnahme auf die Zeichnungen.
- Fig. 1: ist eine schematische Perspektivansicht einer Ausführungsform der Vorrichtung zum Einschleusen von Behältern in eine Transportvorrichtung;
- Fig. 2-4: zeigen schematisch die Befüllung der Speichereinrichtung mit kleinen Behältern in Dreiergruppen;
- Fig. 5-8: zeigen schematisch die Befüllung der Speichereinrichtung mit kleinen Behältern in Zweiergruppen; und
- Fig. 9-12: zeigen schematisch die Befüllung der Speichereinrichtung mit großen Behältern in Dreiergruppen.

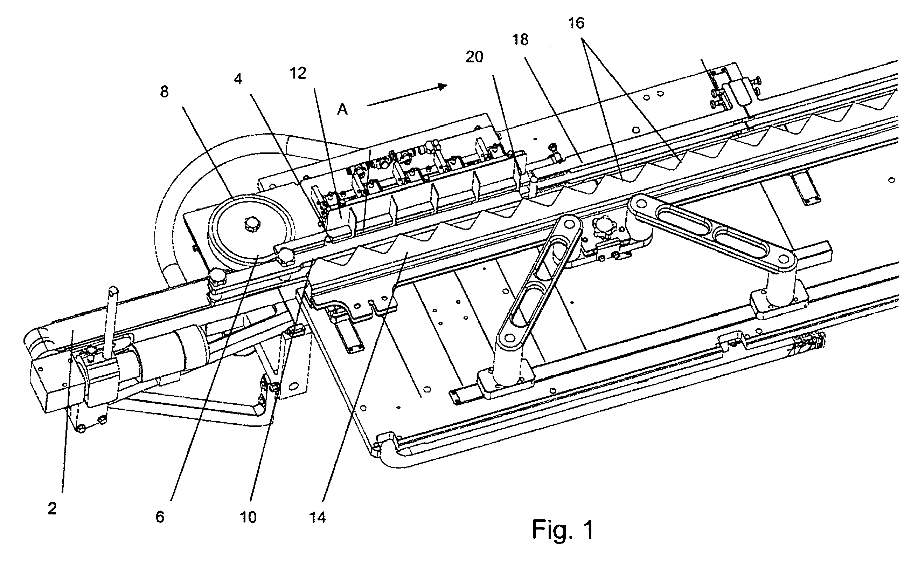

In Fig. 1 ist eine Ausführungsform der Vorrichtung zum Einschleusen von Behältern in eine Transportvorrichtung dargestellt. Die Vorrichtung umfasst ein Transportband 2, auf dem die Behälter 4 stehen und vorwärts bewegt werden. Das Transportband 2 bewegt sich in der Regel mit einer konstanten Geschwindigkeit in Transportrichtung (Pfeil A) der Behälter 4. Die Behälter 4 können aufrecht stehende Dosen oder Fläschchen sein und aus vielen unterschiedlichen Materialien bestehen. Üblicherweise sind die Behälter 4 beim Durchlauf der Vorrichtung leer oder mit Trockenmittelbehältern oder ähnlichem gefüllt.

Die Vorrichtung weist außerdem eine drehbare Vereinzelungsvorrichtung auf, die in der dargestellten Ausführungsform als intermittierend angetriebenes Vereinzelungsrad 6 ausgebildet ist. Die Drehgeschwindigkeit der Vereinzelungsvorrichtung während eines Drehzyklus ist dabei vorzugsweise niedriger als die Geschwindigkeit des Transportbandes 2, kann alternativ auch höher sein. Die drehbare Vereinzelungsvorrichtung kann neben der dargestellten Ausführungsform auch aus zwei gegenüberliegenden, gegensinnig angetriebenen Vereinzelungsrädern, einem Vereinzelungsband oder zwei gegenüberliegenden Vereinzelungsbändern bestehen.

In der dargestellten Ausführungsform weist das Vereinzelungsrad eine mit weichem Kunststoff oder Gummi beschichtete Mantelfläche 8 auf, die mit den durch das Transportband 2 in loser Aneinanderreihung herantransportierten aufrecht stehenden Behältern 4 in Kontakt kommt und diese aufgrund der zwischen der Mantelfläche 8 und den Behältern 4 auftretenden Reibung in Transportrichtung A verzögert. Dem Vereinzelungsrad 6 liegt hierbei eine lineare Führungsschiene 10 gegenüber, die gewährleistet, dass die Behälter 4 auf dem Transportband 2 bleiben und ein Gegendruck zum Vereinzelungsrad 6 aufgebaut wird.

Stromab der Vereinzelungsvorrichtung 6 umfasst die Vorrichtung eine stationäre Spelchereinrichtung 12 für die Behälter 4. Das Transportband 2 erstreckt sich dabei von einem Bereich vor der Vereinzelungsvorrichtung 6 bis mindestens zur Speichereinrichtung 12. Ebenso erstreckt sich die Führungsschiene 10 vorzugsweise von der Vereinzelungsvorrichtung 6 bis zum Ende der Speichereinrichtung 12.

Die Speichereinrichtung 12 dient dazu, die von der Vereinzelungsvorrichtung 6 vereinzelten Behälter 4 in definierten Abständen zwischenzuspeichern, um sie anschließend an eine getaktete Transportvorrichtung 14 zu übergeben.

Die Transportvorrichtung 14 ist hier als Schieberechen ausgestaltet, der sowohl in Transportrichtung A der Behälter 4 als auch quer zur Transportrichtung der Behälter hin- und herverschiebbar ist. Die Behälter 4 sind dabei in Aufnahmen 16 des Schieberechens aufgenommen, welche sich zur Speichereinrichtung 12 hin öffnen und im dargestellten bevorzugten Ausführungsbeispiel im Wesentlichen dreieckförmig ausgestaltet sind. Damit ergibt sich die Möglichkeit einer variablen Anpassung an verschiedene Behältergrößen. Den Aufnahmen 16 gegenüberliegend ist im Bereich der Speichereinrichtung 12 eine Gegenhaltefläche 18 ausgebildet, die auf derselben Seite der Transportbahn 2 angeordnet ist wie das Vereinzelungsrad 6. Die Gegenhaltefläche 18 ist vorzugsweise glatt ausgebildet, um eine möglichst geringe Reibung mit den Behältern 4 zu erzeugen und dient zur Stützung der durch die Transportvorrichtung 14 vorwärtsbewegten Behälter 4. Die Gegenhaltefläche 18 erstreckt sich im dargestellten Beispielsfall über die gesamte Länge des Schieberechens.

Die stationäre Speichereinrichtung 12 für die Behälter 4 weist eine Mehrzahl von in Transportrichtung in Reihe angeordneten Stoppern 20 auf, die individuell angesteuert werden können. Jeder Stopper 20 kann somit quer zur Transportrichtung ausgefahren werden, wodurch eine Mehrzahl von in Transportrichtung nacheinander angeordneten Speicherpositionen definiert wird. Jeder Speicherposition ist hierbei ein Behälter 4 zugeordnet, allerdings können auch zwei Speicherpositionen durch einen einzigen großen Behälter 4 besetzt sein, wie später noch näher erläutert wird.

Die Stopper 20 sind beispielsweise über geeignete Pneumatik bewegbar. Auch andere Antriebsarten sind für den Fachmann denkbar.

Die Speichereinrichtung 12 weist außerdem eine Mehrzahl von Sensoren 22 auf, die im Bereich der Speicherpositionen oder zwischen den Speicherpositionen angeordnet sind. Wenn ein bestimmter Sensor 22 einen durchlaufenden Behälter 4 detektiert (z.B. dessen steigende oder fallende Flanke), wird dieser Sensor 22 entsprechende Signale an eine Steuereinrichtung (nicht dargestellt) liefern, die dafür sorgt, dass als Reaktion ein vorbestimmter Stopper 20 ausgefahren wird. In der Regel ist die Steuereinrichtung wegen der zeitlichen Verzögerung derart programmiert, dass immer der stromab nächste oder übernächste Stopper 20 ausgefahren wird.

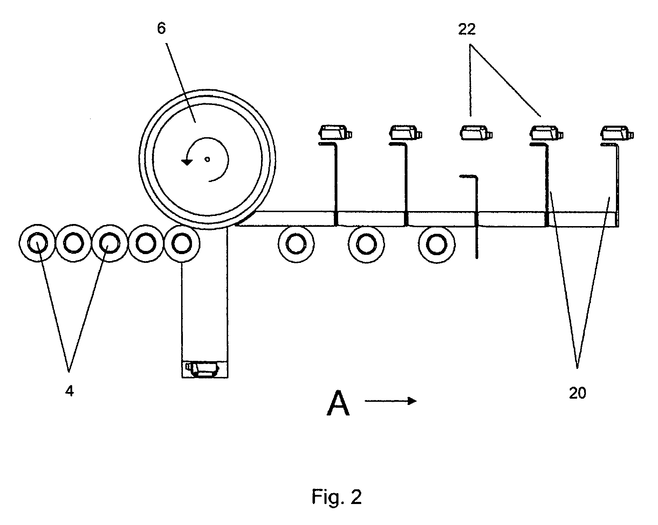

Damit ergibt sich das in den Fig. 2 bis 4 dargestellte Ablaufschema beim Betrieb der Vorrichtung. Zunächst werden die Behälter 4 auf dem Transportband 2 in loser Aneinanderreihung an die Vereinzelungsvorrichtung herantransportiert. Aufgrund der langsameren Drehgeschwindigkeit des Vereinzelungsrades 6 im Vergleich zum Transportband 2 wird jeweils ein mit dem Vereinzelungsrad 6 in Berührung kommender Behälter 4 durch diesen in Transportrichtung A verzögert und somit vereinzelt. Dabei verbleibt der Behälter 4 jedoch auf dem Transportband 2 und wird hinter dem Vereinzelungsrad 6 wieder durch das Transportband 2 vorwärts bewegt.

Im Anschluss läuft jeder vereinzelte Behälter 4 in die Speichereinrichtung 12 ein, in der die einzelnen Speicherpositionen sequentiell mit Behältern 4 aufgefüllt werden. In der in Fig. 2 dargestellten Ausführungsform weist die Speichereinrichtung 12 fünf Stopper 20 auf, von denen nur der dritte Stopper 20 zu Beginn des Auffüllvorgangs der Speichereinrichtung 12 ausgefahren ist. Sobald der Durchlauf des zweiten Behälters 4 an der von rechts vierten oder fünften Speicherposition mittels des entsprechenden Sensors 22 detektiert wird, fährt der stromauf zum dritten Stopper, nächste Stopper 20, im vorliegenden Fall also der von links betrachtet zweite Stopper 20, aus, woraufhin sich die zugehörige Speicherposition wieder mit dem nächsten Behälter 4 füllt usw.

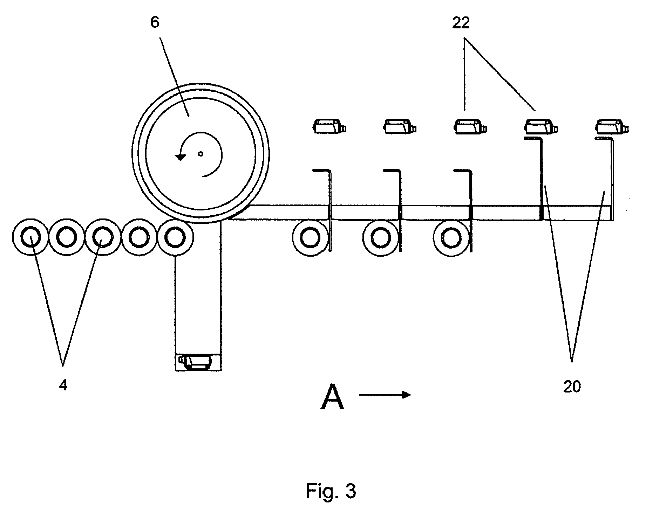

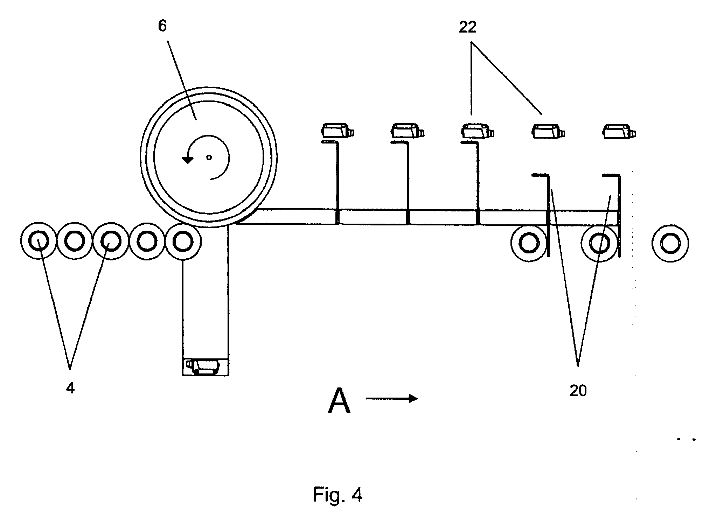

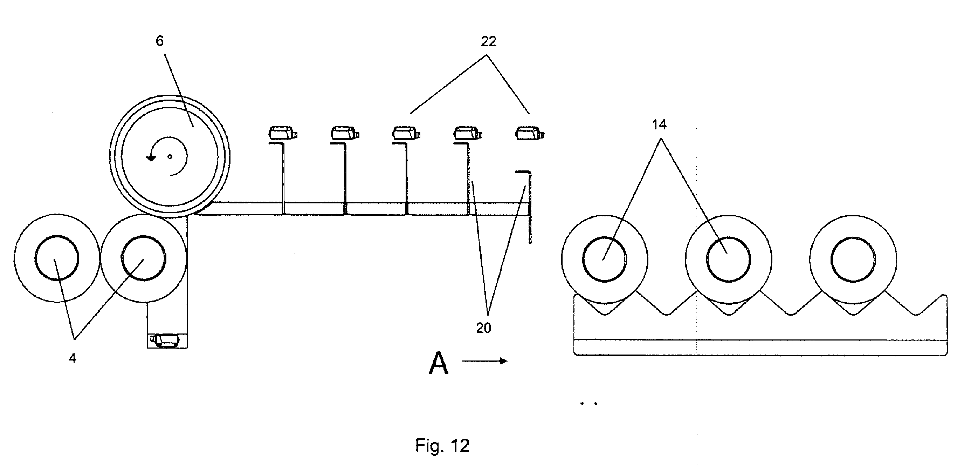

In Fig. 3 ist die Befüllung der Speichereinrichtung 12 mit drei Behältern 4 an den drei links gelegenen Speicherpositionen dargestellt. Anschließend werden die drei gespeicherten Behälter 4, wie in Fig. 4 dargestellt ist, weiterbewegt, wobei die drei zuvor ausgefahrenen Stopper 20 gleichzeitig eingezogen werden müssen, um eine Weiterbewegung der Behälter 4 zu ermöglichen. Die Weiterbewegung der Behälter 4 erfolgt dabei vorzugsweise mittels der getakteten Transportvorrichtung 14, die lediglich in Fig. 1 und 12 dargestellt ist.

In Fig. 4 ist das Ergebnis des getakteten Verschiebungsschritts dargestellt. Die Behälter 4 wurden um drei Positionen weitergeschoben, und der Auffüllvorgang der drei links angeordneten Speicherpositionen der Speichereinrichtung 12 kann wieder von vorne beginnen. Auf diese Weise wird eine getaktete Übergabe von in einem definierten Abstand angeordneten Behältern 4 an weitere Bearbeitungsstationen möglich.

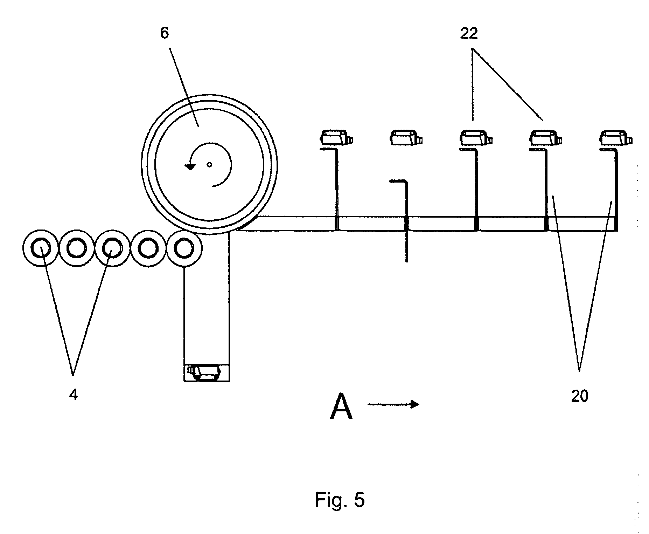

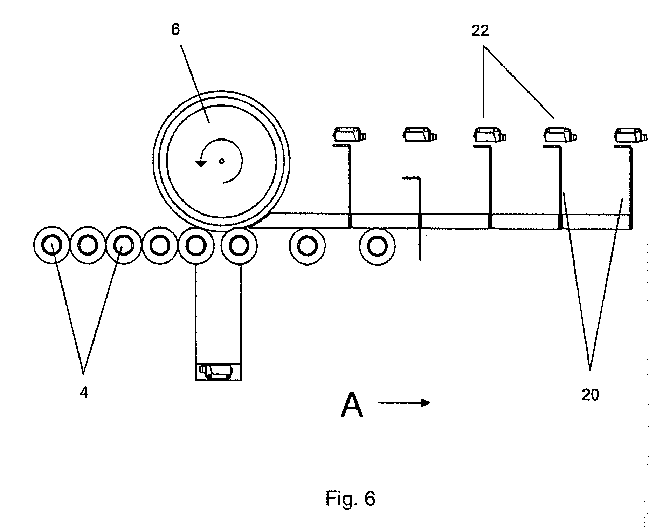

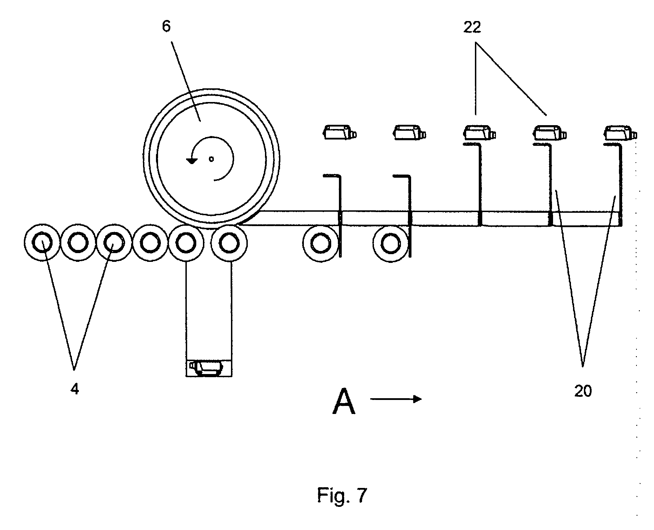

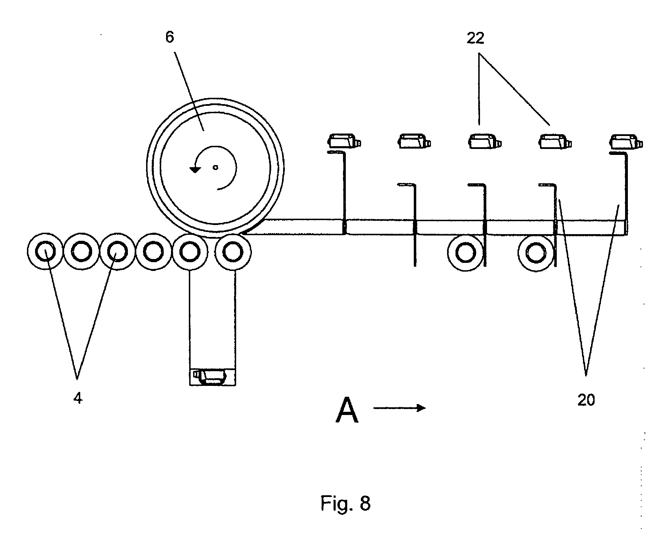

In Fig. 5 bis Fig. 8 ist eine ähnliche Auffüllung der Speichereinrichtung 12 beschrieben, wobei jeweils nur zwei Behälter 4 gleichzeitig in die Speichereinrichtung 12 eingeschleust werden, bevor sie durch die getaktete Transportvorrichtung 14 weiterbewegt werden.

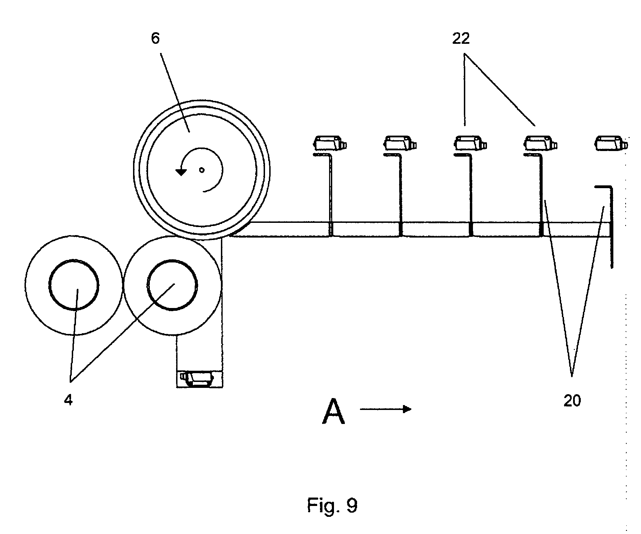

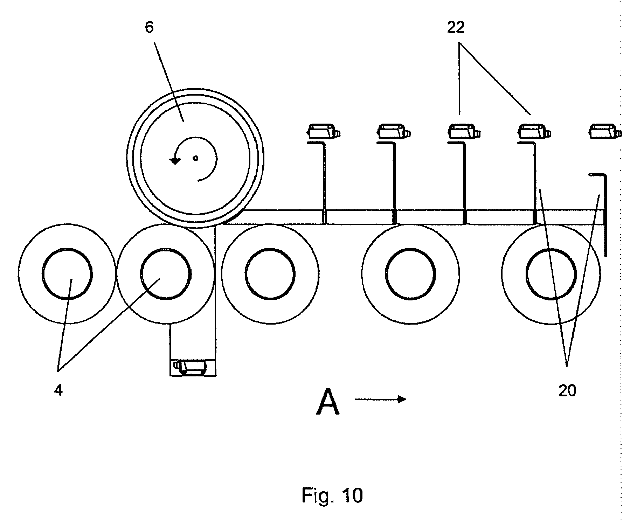

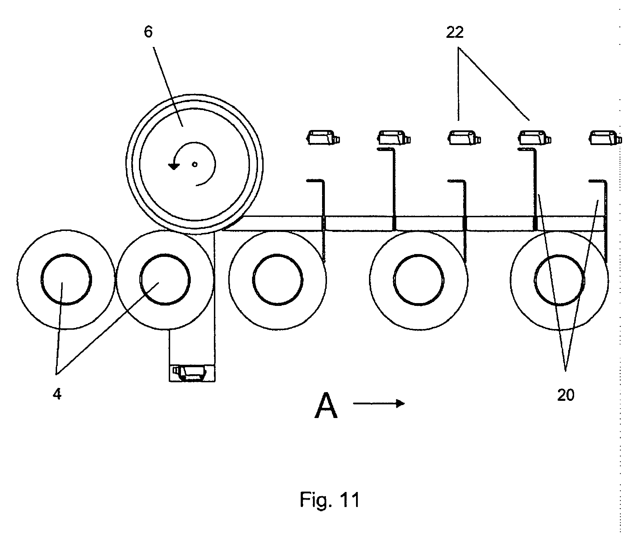

In Fig. 9 bis 12 ist eine Einschleusung von Behältern 4 größeren Durchmessers schematisch dargestellt. Dabei wird jeder zweite Stopper 20 nicht ausgefahren.

Auf diese Weise gelingt es bei geeigneter Ansteuerung, Behälter 4 verschiedener Größe und Form einzuschleusen, ohne mechanische Formatanpassungen vornehmen oder Formatteile auszutauschen zu müssen.

Die Sensoren 22 und Stopper 20 können durch die Steuereinrichtung auch auf andere geeignete Weise gekoppelt sein.

Außerdem kann die Speichereinrichtung 12 zur Formatanpassung als Ganzes quer zur Transportrichtung A der Behälter 4 verschoben werden.

## Patentansprüche

1. Verfahren zum Einschleusen von lose aneinandergereihten aufrecht stehenden Behältern (4) in eine Transportvorrichtung (14), mit folgenden Schritten:
Vereinzeln der lose aneinandergereihten Behälter (4) nacheinander in einer Transportrichtung (A) mittels einer drehbaren Vereinzelungsvorrichtung (6),
Auffüllen von in Transportrichtung nacheinander angeordneten Speicherpositionen einer der Vereinzelungsvorrichtung (6) nachgeschalteten stationären Speichereinrichtung (12) mit den vereinzelten Behältern (4), wobei die Speichereinrichtung (12) eine Mehrzahl von in Transportrichtung in Reihe angeordneten Stoppern (20), die quer zur Transportrichtung ausgefahren werden, und eine Mehrzahl von Sensoren (22), die im Bereich der Speicherpositionen oder zwischen den Speicherpositionen angeordnet sind, aufweist,
**dadurch gekennzeichnet, dass**
ein vorbestimmter Sensor (22) jeweils ein Signal an eine Steuereinrichtung übermittelt und als Reaktion ein vorbestimmter Stopper (20) ausgefahren wird, sodass die Stopper (20) individuell ausgefahren werden und die Speicherpositionen sequentiell aufgefüllt werden.

2. Verfahren nach Anspruch 1, **dadurch gekennzeichnet, dass** der vorbestimmte Stopper (20) stromab vom jeweiligen vorbestimmten Sensor (22) gelegen ist.

3. Verfahren nach Anspruch 1 oder 2, **dadurch gekennzeichnet, dass** für eine Übergabe der Behälter (4) an die Transportvorrichtung (14) alle ausgefahrenen Stopper (20) gleichzeitig eingezogen werden.

4. Verfahren nach einem der vorangehenden Ansprüche, **dadurch gekennzeichnet, dass** die Vereinzelungsvorrichtung (6) aus zwei gegenüberliegenden Vereinzelungsbändern besteht.

5. Verfahren nach einem der Ansprüche 1 bis 3, **dadurch gekennzeichnet, dass** die Vereinzelungsvorrichtung (6) als intermittierend angetriebenes Vereinzelungsrad ausgebildet ist.

6. Verfahren nach Anspruch 5, **dadurch gekennzeichnet, dass** das Vereinzelungsrad (6) eine mit weichem Kunststoff oder Gummi beschichtete Mantelfläche (8) aufweist.

7. Verfahren nach einem der vorangehenden Ansprüche, **dadurch gekennzeichnet, dass** ein Transportband (2) zum Abstellen und Vorwärtsbewegen der Behälter (4) vorgesehen ist, das sich von einem Bereich vor der Vereinzelungsvorrichtung (6) bis mindestens zur Speichereinrichtung (12) erstreckt.

## Claims

1. Method for channelling upright containers (4), which are loosely lined up in a row, into a transport device (14), comprising the following steps:
successively separating the containers (4) loosely lined up in a row in a transport direction (A) by means of a rotatable separating device (6),
filling the storage locations, which are arranged in a row in the transport direction, of a stationary storage means (12), which is arranged downstream of the separating device (6), with the separated containers (4), the storage means (12) comprising a plurality of stoppers (20) which are arranged in a row in the transport direction, are extended transversely to the transport direction, and comprise a plurality of sensors (22) which are arranged in the region of the storage locations or between the storage locations,
**characterised in that**
a predetermined sensor (22) transmits a signal to a control means and, in response, a predetermined stopper (20) is extended, such that the stoppers (20) are individually extended and the storage locations are sequentially filled.

2. Method according to claim 1, **characterised in that** the predetermined stopper (20) is placed downstream of the corresponding predetermined sensor (22).

3. Method according to either claim 1 or claim 2, **characterised in that** all the extended stoppers (20) are simultaneously retracted to deliver the container (4) to the transport device (14).

4. Method according to any of the preceding claims, **characterised in that** the separating device (6) consists of two opposing separating belts.

5. Method according to any of claims 1 to 3, **characterised in that** the separating device (6) is formed as an intermittently driven separating wheel.

6. Method according to claim 5, **characterised in that** the separating wheel (6) comprises a lateral surface (8) which is coated with flexible plastics material or rubber.

7. Method according to any of the preceding claims, **characterised in that** a transport belt (2) is provided for stopping and advancing the containers (4), which belt extends from a region in front of the separating device (6) as far as at least the storage means (12).

## Revendications

1. Procédé destiné à sasser des récipients (4), se tenant debout et juxtaposés de façon lâche, dans un dispositif de transport (14), comprenant les étapes suivantes :
séparation successive des récipients (4), juxtaposés de façon lâche, dans un dispositif de transport (A) au moyen d'un dispositif de séparation (6) rotatif,
chargement de positions de stockage, disposées les unes derrière les autres dans la direction de transport, d'un dispositif de stockage (12) stationnaire, monté en aval du dispositif de séparation (6), par les récipients (4) séparés, le dispositif de stockage (12) comprenant une pluralité d'arrêtoirs (20), qui sont disposés en rangée dans la direction de transport et sortis transversalement à la direction de transport, et une pluralité de capteurs (22), qui sont disposés dans la zone des positions de stockage ou entre les positions de stockage,
**caractérisé en ce que**
un capteur prédéfini (22) transmet respectivement un signal à un dispositif de commande et un arrêtoir (20) prédéfini est sorti en réaction, de sorte que les arrêtoirs (20) sont sortis individuellement et les positions de stockage sont chargées de façon séquentielle.

2. Procédé selon la revendication 1, **caractérisé en ce que** l'arrêtoir (20) prédéfini est placé en aval du capteur (22) respectif prédéfini.

3. Procédé selon l'une des revendications 1 et 2, **caractérisé en ce que** tous les arrêtoirs (20) sortis sont rentrés simultanément pour un transfert des récipients (4) sur le dispositif de transport (14).

4. Procédé selon l'une des revendications précédentes, **caractérisé en ce que** le dispositif de séparation (6) est constitué de deux bandes de séparation en vis-à-vis.

5. Procédé selon l'une des revendications 1 à 3, **caractérisé en ce que** le dispositif de séparation (6) est réalisé sous forme de roue de séparation entraînée par intermittence.

6. Procédé selon la revendication 5, **caractérisé en ce que** la roue de séparation (6) présente une surface d'enveloppe (8) revêtue de matière plastique souple ou de caoutchouc.

7. Procédé selon l'une des revendications précédentes, **caractérisé en ce qu'**il est prévu une bande transporteuse (2) pour l'arrêt et le mouvement d'avance des récipients (4), laquelle bande s'étend d'une zone en amont du dispositif de séparation (6) jusqu'au moins le dispositif de stockage (12).
